# EUROPÄISCHE PATENTANMELDUNG

(11) **EP 0 902 349 A2**
(43) Veröffentlichungstag der Anmeldung: **17.03.1999**
(21) Anmeldenummer: 98117375.0
(22) Anmeldetag: 14.09.1998
(51) Int. Cl.: G05G 1/04

(54) **Handkurbel**

(30) Priorität: 15.09.1997 DE 29716460 U
(71) Anmelder: Euro-Hitch Sattelkupplungen GmbH, 33758 Schloss Holte-Stukenbrock (DE)
(72) Erfinder: Laarman, Gregory, Holland, Michigan 49423 (US)
(74) Vertreter: TER MEER STEINMEISTER & PARTNER GbR

(57) **Zusammenfassung**

Handkurbel mit einer Eingangswelle eines durch die Handkurbel angetriebenen Geräts verbundenen oder verbindbaren Wellenabschnitt (10), einem parallel zu diesem gerichteten und in Längsrichtung versetzt angeordneten Handgriffabschnitt (12) und einem den Wellenabschnitt (10) und den Handgriffabschnitt (12) in rechtwinklig-Z-förmiger Anordnung verbindenden Hebelabschnitt (14), dadurch gekennzeichnet, daß der Wellenabschnitt (10) mit der Eingangswelle drehfest, aber wenigstens in der Ebene der Handkurbel schwenkbar verbunden oder verbindbar ist, und daß zwischen dem Wellenabschnitt (10) und dem Hebelabschnitt (14) einerseits und diesem und dem Handgriffabschnitt (12) andererseits zu beiden angrenzenden Abschnitten schräg verlaufende Zwischenabschnitte (16,18) vorgesehen sind.

## Beschreibung

Die Erfindung betrifft eine Handkurbel mit:
- einem mit einer Eingangswelle eines durch die Handkurbel angetriebenen Geräts verbundenen oder verbindbaren Wellenabschnitt
- einem parallel zu diesem gerichteten und in Längsrichtung versetzt angeordneten Handgriffabschnitt, und
- einem den Wellenabschnitt und den Handgriffabschnitt in rechtwinklig-Z-förmiger Anordnung verbindenden Hebelabschnitt.

Handkurbeln werden zum Antreiben von unterschiedlichen Geräten und Vorrichtungen verwendet. In vielen Fällen handelt es sich dabei um das Heben und Senken von Lasten unterschiedlicher Art mit Winden, Wagenhebern, Stützen von Sattelaufliegern oder dergleichen. Derartige Hubvorrichtung können zwar ein geeignetes Übersetzungsverhältnis aufweisen, das die durch Muskelkraft anhebbare maximale Last erhöht, jedoch erfordert dies eine große Anzahl von Kurbelumdrehungen.

Während somit beim Anheben einer Last eine große Anzahl von Kurbelumdrehungen unvermeidlich ist, erweist sich die Notwendigkeit der zahlreichen Umdrehungen beim Absenken einer Last oder bei lastfreiem Betrieb als lästig und zeitraubend.

Der Erfindung liegt daher die Aufgabe zugrunde, eine Handkurbel zu schaffen, die in einer Stellung mit großem Hebelarm zum Anheben von Lasten und einer weiteren Stellung mit kleinem Hebelarm für eine raschere Drehung bei lastfreiem Betrieb anwendbar ist.

Diese Aufgabe wird erfindungsgemäß bei einer Handkurbel der obigen Art dadurch gelöst, daß der Wellenabschnitt mit der Eingangswelle drehfest, aber wenigstens in der Ebene der Handkurbel schwenkbar verbunden oder verbindbar ist und daß zwischen dem Wellenabschnitt und dem Hebelabschnitt einerseits und diesem und dem Handgriffabschnitt andererseits zu beiden angrenzenden Abschnitten schräg verlaufende Zwischenabschnitte vorgesehen sind.

Eine derartige Handkurbel kann zum einen mit ihrem Wellenabschnitt mit der Eingangswelledes Geräts ausgerichtet werden. In diesem Falle wird die Handkurbel mit Hilfe des Handgriffabschnitts gedreht. Sie weist einen großen Hebelarm auf, der das Heben von Lasten gestattet. Andererseits kann der Wellenabschnitt derart an die Eingangswelle angesetzt werden, daß die Verlängerung der geometrischen Achse der Eingangswelle parallel zu den Achsen der beiden schrägen Zwischenabschnitte und in der Mitte zwischen diesen verläuft. In diesem Falle können die beiden Zwischenabschnitte Handgriffe der Kurbel bilden, die zwar im Verhältnis zu dem Wellenabschnitt nur einen kurzen Hebelarm besitzen, dafür aber eine relativ rasche Drehung ermöglichen.

Vorzugsweise beträgt der Winkel, mit dem beide Zwischenabschnitte mit den angrenzenden Abschnitten verbunden sind, 45°. In diesem Fall ist der Wellenabschnitt in bezug auf die Eingangswelle ebenfalls um ca. 45° schwenkbar bzw. zwischen beiden Winkelstellungen umsteckbar. Es ist jedoch nicht unbedingt notwendig, die erwähnten Winkel auf 45° festzulegen. Je kleiner der Winkel zwischen den beiden Zwischenabschnitten und dem Wellenabschnitt einerseits sowie dem Handgriffabschnitt andererseits ist, desto größer wird der Hebelarm bei der zweiten Einsatzform der erfindungsgemäßen Handkurbel.

Die Eingangswelle und der Wellenabschnitt besitzen vorzugsweise formschlüssig zusammenwirkende Profilabschnitte, etwa einen Außenvierkant an der Eingangswelle und einen Innenvierkant am Wellenabschnitt.

Wie üblich, kann die Handkurbel fest auf der Eingangswelle installiert oder auch abziehbar sein. Sie kann im übrigen auch nach dem Gebrauch in einer Ruhestellung abklappbar sein.

Bei einer bevorzugten Ausführungsform sind zwei im Winkel zueinander stehende Profilabschnitte mit dem Ende des Wellenabschnitts und untereinander verbunden. Einer der Profilabschnitte fluchtet mit der Achse des Wellenabschnitts, während der andere unter 45° zu dem Wellenabschnitt geneigt ist.

Auf gegenüberliegenden Seiten der beiden Profilabschnitte befinden sich zwei parallele, deckungsgleiche Wangen mit giebelförmigen Umriß. In diesen Wangen befinden sich in deckungsgleicher Anordnung V-förmige Schlitze, deren beide Schenkel in Achsrichtung der beiden Profilabschnitte gerichtet sind. In diesen Schlitzen befinden sich Stifte, die auf gegenüberliegenden Seite von der Eingangswelle des Geräts ausgehen. Der Wellenabschnitt kann daher in beiden Winkelstellungen mit dem jeweiligen Profilabschnitt bis zum formschlüssigen Eingriff der beiderseitigen Profilabschnitte vorgeschoben und auf der anderen Seite von der Eingangswelle abgezogen werden. Wenn die Stifte den Scheitelpunkt der V-förmigen Schlitze erreicht haben, kann die Handkurbel von der einen in die andere Winkelstellung geschwenkt werden.

Im folgenden werden bevorzugte Ausführungsbeispiele der Erfindung anhand der beigefügten Zeichnung näher erläutert.
- Fig. 1: ist eine schematische Seitenansicht einer erfindungsgemäßen Handkurbel;
- Fig. 2: zeigt eine Draufsicht zu Fig. 1.

Wie aus der Zeichnung hervorgeht, besteht die erfindungsgemäße Handkurbel zunächst aus den bei Handkurbeln üblichen Elementen, nämlich einem Wellenabschnitt 10, einem parallel und in Abstand zu diesem und im übrigen in Längsrichtung versetzt verlaufenden Handgriffabschnitt 12 und einem senkrecht zu beiden verlaufenden, beide in einer Z-Anordnung verbindenden Hebelabschnitt 14. Im Unterschied zu herkömmlichen Handkurbeln erstreckt sich dieser Hebelabschnitt nicht unmittelbar bis zu den beiden anderen Abschnitten 10,12. Vielmehr sind die drei genannten Abschnitte über schräg angeordnete Zwischenabschnitte 16,18 verbunden, und zwar bei dem dargestellten Beispiel jeweils unter 45°.

Auf dem Handgriffabschnitt 12 befindet sich eine drehbar Hülse 20 zum Erfassen mit der Hand.

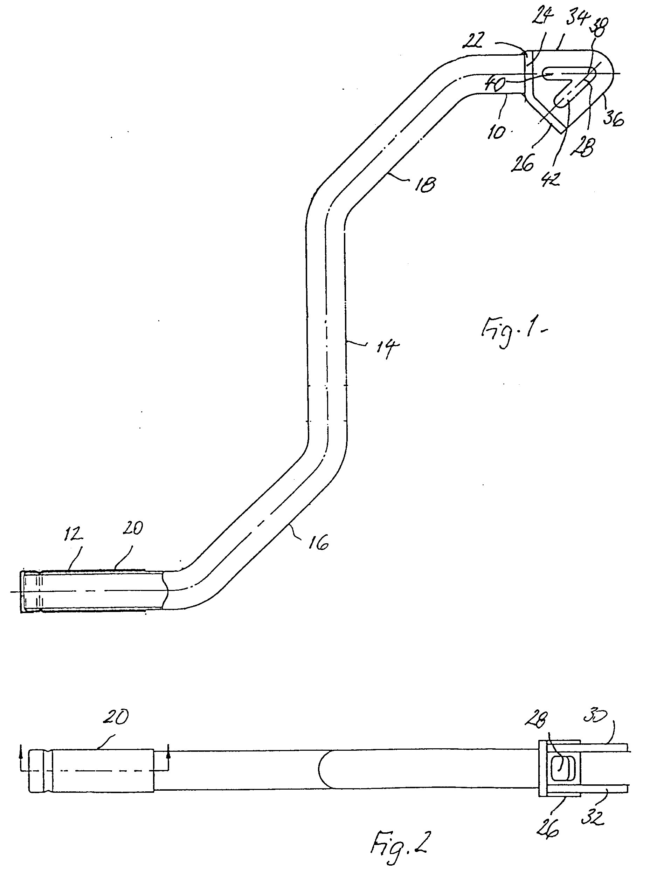

Am freien Ende des Wellenabschnitts 10 befindet sich eine gemäß Fig. 2 rechteckige Platte 22, die aus zwei miteinander verbundenen Teilflächen 24,26 besteht, die stumpfwinklig zueinander abgewinkelt sind, und zwar beim dargestellten Ausführungbeispiel unter 180 - 45 = 135°. Eine der beiden Teilflächen 24 ist stumpf vor das Ende des Wellenabschnitts 10 gesetzt, während das andere, wie in der Zeichnung gezeigt, schräg vom Ende des Wellenabschnittes absteht. In beiden Teilflächen 24,26 befindet sich eine Ausnehmung in der Form eines Innenvierkants 28, wie Fig. 2 erkennen läßt. Dieser Innenvierkant 28 gestattet die Aufnahme eine Welle mit Außenvierkantprofil, wie später näher erläutert werden soll. Sofern die Handkurbel aus Rohrmaterial besteht, kann diese Welle durch den Innenvierkant der anderen Teilfläche 24 hindurch in das Innere des Wellenabschnitts 10 eintreten.

Aus Fig. 1 und 2 geht im übrigen hervor, daß an den gegenüberliegenden, abknickenden Rändern der Platte 22 plattenförmige, parallel zueinander vorspringende Wangen 30,32 befestigt sind, deren äußere Ränder 34,36 senkrecht zu den Teilflächen 24,26 stehen und somit keilförmig zusammenlaufen. Innerhalb der beiden Wangen 30,32 befinden sich V-förmige Schlitze 38, deren Schenkel 40,42 senkrecht zu den beiden Flächen 24,26 gerichtet sind.

Die Handkurbel ist vorgesehen zur Verbindung mit einer nicht dargestellten Eingangswelle eines anzutreibenden Geräts, die, bezogen auf das dargestellte Beispiel, einen Außenvierkantquerschnitt aufweist, der dem Innenvierkant 28 entspricht. Auf gegenüberliegenden Außenseiten dieses Außenvierkants befinden sich nicht dargestellte, vorspringende Stifte, die in den Schlitz 38 der Wangen 30,32 eintreten.

Die Handkurbel kann entweder mit ihrem Wellenabschnitt derart auf die Eingangswelle aufgeschoben werden, daß diese in die Ausnehmung des Innenvierkants 28 eintritt. In diesem Falle wandert der nicht dargestellte Stift in einem der Schenkel 40,42 in Richtung der entsprechenden Fläche 24,26 bis zum Ende des Schenkels 40,42. Wird die Handkurbel von der Eingangswelle abgezogen, so trennen sich zum einen die formschlüssig ineinandergreifenden Profilbereiche der Handkurbel und der Eingangswelle voneinander. Im übrigen wandert der Stift bis zum Scheitelpunkt des V-förmigen Schlitzes 38. In dieser Position kann die Handkurbel um 45° geschwenkt werden und anschließend auf die Eingangswelle aufgeschoben werden, bis die formschlüssige Verbindung in der neuen Winkelstellung hergestellt ist.

Während die Handkurbel in der einen Winkelposition nach Art einer normalen Handkurbel mit relativ großem Hebelarm bewegt werden kann, wird sie in der anderen Winkelstellung für eine rasche, Ieichtgängige Drehung mit beiden Händen verwendet.

## Patentansprüche

1. Handkurbel mit:
- einem mit einer Eingangswelle eines durch die Handkurbel angetriebenen Geräts verbundenen oder verbindbaren Wellenabschnitt (10),
- einem parallel zu diesem gerichteten und in Längsrichtung versetzt angeordneten Handgriffabschnitt (12), und
- einem den Wellenabschnitt (10) und den Handgriffabschnitt (12) in rechtwinklig-Z-förmiger Anordnung verbindenden Hebelabschnitt (14), dadurch **gekennzeichnet**, daß der Wellenabschnitt (10) mit der Eingangswelle drehfest, aber wenigstens in der Ebene der Handkurbel schwenkbar verbunden oder verbindbar ist, und daß zwischen dem Wellenabschnitt (10) und dem Hebelabschnitt (14) einerseits und diesem und dem Handgriffabschnitt (12) andererseits zu beiden angrenzenden Abschnitten schräg verlaufende Zwischenabschnitte (16,18) vorgesehen sind.

2. Handkurbel nach Anspruch 1, dadurch **gekennzeichnet**, daß die Zwischenabschnitte (16,18) im wesentlichen unter 45° zu den beiden angrenzenden Abschnitten (10,12,14) verlaufen.

3. Handkurbel nach Anspruch 1 oder 2, dadurch **gekennzeichnet**, daß der Wellenabschnitt (10) und die Eingangswelle in Drehrichtung formschlüssig ineinander greifende Profilabschnitte aufweisen.

4. Handkurbel nach Anspruch 3, dadurch **gekennzeichnet**, daß die Eingangswelle ein Außenvierkantprofil und der Wellenabschnitt (10) ein Innenvierkantprofil (28) aufweist.

5. Handkurbel nach einem der vorhergehenden Ansprüche, dadurch **gekennzeichnet**, daß der Wellenabschnitt (10) in bezug auf die Eingangswelle wenigstens zwischen einem Winkel, bei dem der Wellenabschnitt (10) koaxial zur Eingangswelle liegt, und einem Winkel, bei dem die geometrische Achse der Eingangswelle parallel zwischen den Achsen der beiden Zwischenabschnitte (16,18) und in gleichem Abstand zu beiden verläuft, schwenkbar ist.

6. Handkurbel nach einem der Ansprüche 3 bis 5, dadurch **gekennzeichnet**, daß der Wellenabschnitt (10) an seinem freien Ende einen koaxial zum Wellenabschnitt gerichteten und einen schräg zu diesem angeordneten, unrunden Profilabschnitt, insbesondere Innenvierkant aufweist.

7. Handkurbel nach Anspruch 6, dadurch **gekennzeichnet**, daß in Verlängerung der Profilabschnitte zwei parallele Wangen (30,32) vorgesehen sind, in denen sich deckungsgleiche, V-förmige Schlitze (38) befinden, in denen Stifte auf gegenüberliegenden Seiten der Eingangswelle geführt sind, und daß die Schenkel (40,42) der Schlitze in die Richtung der beiden Verbindungsstellungen zwischen Wellenabschnitt (10) und Eingangswelle gerichtet sind.
